# FASCICULE DE BREVET EUROPEEN

(11) **EP 2 575 575 B1**
(45) Date de publication et mention de la délivrance du brevet: **15.07.2015**
(21) Numéro de dépôt: 11732515.9
(22) Date de dépôt: 23.05.2011
(51) Int. Cl.: A47J 36/24

(54) **ÉQUIPEMENT THERMIQUE MODULABLE POUR PROLONGER & CONTRÔLER L'INERTIE THERMIQUE DE RÉCIPIENTS CALORIFUGES**
FÜR ERWEITERUNG UND KONTROLLE DER WÄRMETRÄGHEIT VON ISOLIERTEN BEHÄLTERN VERÄNDERBARE THERMISCHE ANLAGE
THERMAL EQUIPMENT THAT CAN BE MODIFIED TO EXTEND AND CONTROL THE THERMAL INERTIA OF INSULATED CONTAINERS

(30) Priorité: 28.05.2010 BE 201000325
(43) Date de publication de la demande: 10.04.2013
(73) Titulaire: Truyts, Edwige, 1006 Lausanne (CH)
(72) Inventeur: Truyts, Edwige, 1006 Lausanne (CH)
(86) Numéro de dépôt international: PCT/IB2011/052242
(87) Numéro de publication internationale: WO 2011/148311

(56) Documents cités:
- FR-A1- 2 510 385
- GB-A- 193 098
- US-A- 1 990 640
- US-A- 3 678 248
- US-A1- 2005 139 589

## Description

La presente invention concerne un équipement thermique modulable et mobile permettant de prolonger et contrôler l'inertie thermique de recipients calorifuges destines à la distribution des repas chauds ou à la cuisson.

Les services de restauration distribuent les repas chauds sous forme de buffets ou comptoirs self-service (collectivites) ou avec des plateaux/plats provenant de chariots isothermes (hôpital, cantine, etablissements medico-sociaux). Ces concepts de restauration sont perfectibles, au niveau: qualite alimentaire, sociologique et environnemerital. Le service sur assiette en provenance de la cuisine repond partiellement aux critères de qualite globale definis par les consommateurs mais son coût et ses contraintes ne conviennent qu'à un nombre limite de couverts comme par exemple dans la (haute) gastronomie. Dès qu'il faut servir un nombre important de personnes, les concepts de restauration sont sujets à critiques: files d'attentes, bruit, manque de confort, repas manges froids, manges vite, mauvaise cuisson, menus repetitifs, gras, manque de variete,... Cependant, l'outil de travail n'a fondamentalement pas change alors que les contraintes sont en augmentation avec le nombre croissant de repas pris hors foyer.

Quelle que soit la version, le Bain marie est le moyen mis à disposition pour maintenir en temperature les aliments qui stationnent en cuisine dans l'attente d'être servis ensuite sur assiette. Il constitue aussi la base de fonctionnement du comptoir self-service ou, se pose sur un buffet relie à un corps de chauffe ou, avec un brûleur pour l'autonomie. Les contraintes liees à la manutention dont l'inox induit une faible efficacite energetique et une labilite dé temperature, le rendent peu adequat à des services de repas chauds. Pour eviter tout risque de contamination (developpement de germes pathogènes en milieu tiède), les normes (HACCP) recommandent de maintenir la chaleur des aliments cuits, au-dessus de 63° pendant toute la duree de production et service/distribution afin de ne pas rompre la chaîne du chaud, c'est pourquoi, à defaut de realiser cette condition, elles préconisent la liaison froide.

Les plats sont alors prepares industriellement en cuisine centrale et disposes dans les bacs inox pour être rechauffes/regeneres ensuite dans les cuisines satellites puis disposes sur les bains marie du self-service d'où ils sont transportes par le consommateur lui-même. Le processus est long et implique de nombreuses operations de conditionnements, stockages en chambre froide, transports refrigeres, nombreux equipements et locaux, auxquelles il faut ajouter des equipements supplementaires: lampes infrarouges, chauffe-assiettes, micro-ondes repartis sur la distance à parcourir pour palier au refroidissement des aliments. Les coûts energetiques et ceux inherents à la manutention se cumulent et sont imputes sur le coût global du repas au detriment de la plus-value en "denrees de qualite" produites localement, saisonniers,.....ou au savoir-faire du cuisinier. Ayant un impact sur les methodes de production/distribution, l'outil de travail a donc des consequences sur la qualite des prestations mais aussi sur l'environnement et les ressources.

Pour satisfaire aux attentes, le materiel destine au maintien à temperature des aliments requière d'être multifonctionnel et flexible. En exploitant les specificites thermiques des recipients en materiau calorifuge habituellement utilises pour la cuisson ou la presentation des aliments : ceramiques, porcelaines, grès, terres cuites, faïences ou encore la fonte, assembles à des corps chauffants constitues de materiaux à fort rayonnement/conductivite thermique et à titre d'exemple: la fonte d'alu, de cuivre ou autre alliage de metaux fondus, etc. le perfectionnement du brevet n° EP 0 914 792 BI constitue des dessertes thermiques multifonctionnelles, modulables qui conjuguent mobilite, esthetique et faible encombrement pour servir en self ou sur assiette à proximite des tables, sur un modèle famillial et convivial alors que d'autres modes de chauffage par induction, vitroceram, chariots isothermes, thermos sont des systèmes fixes et/ou fermes à la fois plus encombrants et peu flexibles.

En outre, le mode de chauffage par inertie thermique offre de nombreux avantages, tels que: une chaleur douce, homogène, amortissant les variations de temperature, ne modifiant pas le taux d'humidite dans des recipients plus idoines et propices au contrôle de la temperature des aliments pour preserver la qualite organoleptique, visuelle, et securiser la chaîne du chaud. Un mode d'action qui offre un outil de restauration repondant aux normes techniques afin de faciliter une logistique plus rationnelle, autorisant la liaison chaude, processus plus court, moins coûteux en equipements et moins energivore conjuguee à l'efficacite energetique de l'inertie thermique, autant de facteurs se repercutant en amont sur les choix de produits et l'utilisation des ressources: production locale, saisonnière et incidence sur les cultures et elevages intensifs.

Les equipements thermiques modulables peuvent être manufactures avec une grande flexibilite au niveau des espaces, de l'ergonomie, de l'architecture interieure repondant ainsi aux normes sociologiques d'une restauration de qualite que ce soit en restauration commerciale, collective ou dans les transports.

### NOTES POUR L'EXAMINATEUR

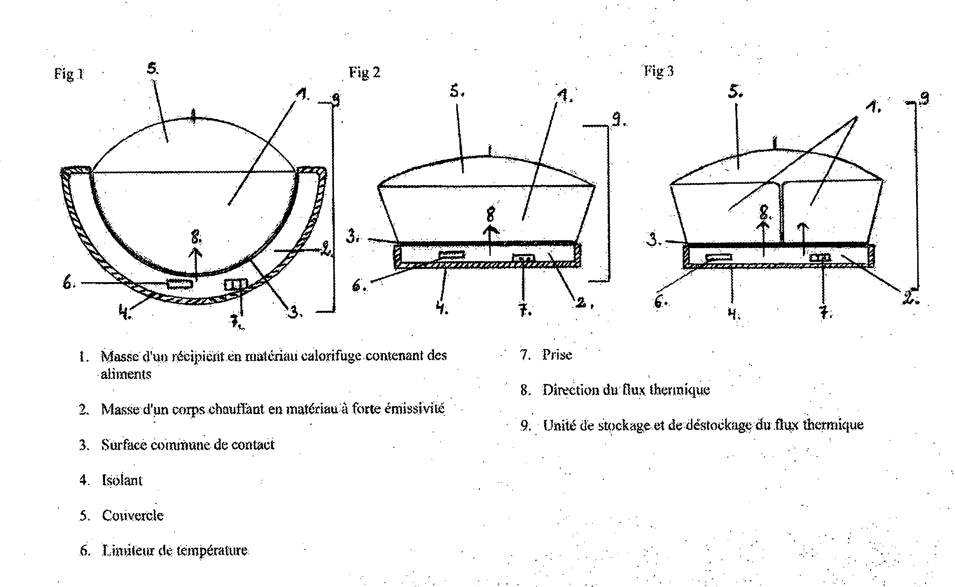

1. L'amelioration de l'agencement du brevet n° EP 0 914 792 81 rend applicable une theorie thermodynamique d'un flux thermique dans des materiaux de propriete thermique opposee rendant possible la prolongation et le contrôle de l'inertie thermique. Ceci represente un interêt surtout en restauration professionnelle. Chaque equipement est apte à stocker et à destocker de la chaleur et à en contrôler sa vitesse de refroidissement resultant d'un rapport mathematique dû aux echanges thermiques tenant compte des coefficients de conductivite des materiaux mis en presence, de leur masse respective et de la surface de conduction, dans chaque équipement selon la revendication. afin de realiser des dessertes thermiques de grandeurs differentes
2. Il n'y a pas (Fig 1) ou peu (Fig 2,3) de deperditions de chaleur autre, que celle qui s'echappe par le recipient au profit des aliments.
3. La chaleur residuelle dans le système permet une reinitialisation rapide de la temperature par de brèves reconnections pendant la phase d'inertie.

## Revendications

1. Equipement thermique modulable (9) prolongeant la température des aliments chauds pour les présenter à proximité des tables, constitué d'un récipient en matériau calorifuge (I) dont la paroi formant le fond delimite la surface de contact (3) avec un corps chauffant constimé d'un matériau **caractérisé par** une forte émissivité (2) et ayant une prise d'alimentation en courant électrique (7), la surface de contact (3) étant conçue pour assurer la conduction thermique, ledit récipient (1), destiné à contenir des aliments, n'étant pas relié à l'alimentation électrique (7) et étant muni d'un couvercle (5), la surface restante du corps chauffant étant recouverte d'un isolant (4), l'équipement constitué par la masse du récipient (1) et la masse du corps chauffant (2) et leur surface commune de contact (3) formant un équipement thermique à double paroi (9) qui, connecté à l'alimentation électrique, dirige le flux thermiques (8) défini par un limiteur de température (6), vers le récipient, ledit récipient calorifuge exerçant un effet tampon sur te rayonnement du corps chauffant augmentant la capacité de stockage et de désotockage du flux thermique dans ledit équipement modifiant les conditions ambiantes dudit récipient, l'équipement thermique formé (9) définissant ainsi sa vitesse de refroidissement permettant de prolonger et contrôler, en économie d'énergie, la température transmise aux aliments, aussi longtemps que la logistique de distribution des repas ou une cuisson le nécessitent.

2. Equipement thermique selon la revendication 1, charactérisé en un système électronique relié à un thermostat actionnant, en fonction des déphasages, une programmation de courtes connexions entre les phases de déconnexions à l'alimentation électrique afin de gérer la température lorsque l'inertie thermique doit être prolongée en fonction des besoins; maintien au-dessus de 63°pour la chaîne du chaud ou cuisson lente.

3. Equipement thermique selon la revendication 1, charactérisé en plusieurs récipients délimitant partiellement la surface de contact d'un même corps chauffant.

4. Une desserte thermique mobile présentant un choix multiple et constituée de plusieurs équipements thermiques selon la revendication 1.

## Patentansprüche

1. Modulierbare thermische Ausrüstung (9), die die Temperatur warmer Nahrungsmittel verlängert, um sie in der Nähe der Tische anzubieten, bestehend aus einem Behälter aus wärmeisolierendem Material (1), dessen Wand, die den Boden bildet, die Anliegefläche (3) zu einem Heizkörper abgrenzt, der aus einem Material mit starkem Emissionsgrad (2) besteht und einen Anschluss zur Versorgung mit elektrischem Strom (7) aufweist, wobei die Anliegefläche (3) dazu dient, die Wärmeleitung zu sichern, wobei besagter Behälter (1), der dazu bestimmt ist, Nahrungsmittel zu enthalten, nicht mit der Stromversorgung (7) verbunden und mit einem Deckel (5) ausgestattet ist, während die übrige Oberfläche des Heizkörpers von einem Isolator (4) bedeckt ist, wobei die Ausrüstung, bestehend aus der Masse des Behälters (1) und der Masse des Heizkörpers (2) und ihrer gemeinsamen Kontaktfläche (3), eine thermische Ausrüstung mit doppelter Wand (9) bildet, die mit der elektrischen Versorgung verbunden ist und den Wärmestrom (8), definiert durch einen Temperaturbegrenzer (6), zu dem Behälter leitet, wobei der wärmeisolierende Behälter eine Pufferwirkung auf die Strahlung des Heizkörpers ausübt, die die Ein- und Auslagerfähigkeit des Wärmestroms in der Ausrüstung erhöht, durch Veränderung der Umgebungsbedingungen des genannten Behälters, wobei die so gebildete thermische Ausrüstung (9) so ihre Abkühlgeschwindigkeit definiert, wodurch es möglich wird, die an die Nahrungsmittel übertragene Temperatur auf energiesparende Weise zu verlängern und zu kontrollieren, so lange, wie es die Verteilungslogistik der Mahlzeiten oder das Kochen es erfordern.

2. Thermische Ausrüstung nach Anspruch 1, **gekennzeichnet durch** ein elektronisches System, verbunden mit einem Thermostat, der je nach den Phasendifferenzen eine Programmierung von kurzen Verbindungen zwischen den Abschaltungsphasen der elektrischen Versorgung aktiviert, um die Temperatur zu steuern, wenn die thermische Trägheit je nach Bedarf verlängert werden muss; Halten auf über 63°C für die Wärmekette oder langsames Kochen.

3. Thermische Ausrüstung nach Anspruch 1, **gekennzeichnet durch** mehrere Behälter, die teilweise die Anliegefläche desselben Heizkörpers begrenzen.

4. Beweglicher thermischer Tischwagen mit vielfältiger Auswahl, bestehend aus mehreren thermischen Einrichtungen nach Anspruch 1.

## Claims

1. Adjustable thermal apparatus (9) prolonging the temperature of hot foods in order to offer them near tables, constituted by a container made of a heat insulating material (1) whose wall forming the bottom delimitates the contact surface (3) with a heating radiator made of a
material **characterized by** a high emissivity (2) and having an electric current (7) power supply plug, the contact surface (3) being designed to provide heat conduction, said container (1), designed for holding food, being not connected to the electric power supply (7) and being equipped with a lid (5), the remaining surface of the heating radiator being covered with an insulator (4), the apparatus constituted by the mass of the container (1) and the mass of the heating radiator (2) and their common contact surface (3) forming a double-walled thermal apparatus (9) that, connected to the electrical power supply, directs the thermal flux (8) defined by a temperature limiter (6), towards the container, said thermal insulating container exerting a buffering effect on the radiation from the heating radiator, increasing the heat storage and release capacity of the thermal flux into said apparatus, modifying the ambient conditions of said container, the thermal apparatus formed (9) thus defining its cooling rate enabling prolongment and control, as energy saving, of the temperature transmitted to the food, as long as the logistics of distribution of the meals or a cooking require it.

2. Thermal apparatus according to claim 1, **characterized by** an electronic system connected to a thermostat, operating, depending on phase shifts, a program of short connections between phases of disconnection of the electric power supply in order to manage the temperature when the thermal inertia must be prolonged as needed; maintaining above 63°C for the heat chain or slow cooking.

3. Thermal apparatus according to claim 1, **characterized by** multiple containers partially bounding the contact surface of a common heating radiator.

4. A multi-selection mobile thermal side table is constituted by multiple thermal apparatus according to claim 1.
